# EUROPÄISCHE PATENTSCHRIFT

(11) **EP 1 340 292 B1**
(45) Veröffentlichungstag und Bekanntmachung des Hinweises auf die Patenterteilung: **18.11.2009**
(21) Anmeldenummer: 01999022.5
(22) Anmeldetag: 23.11.2001
(51) Int. Cl.: H01R 13/436, H01R 13/66

(54) **KLEINBAUENDER KUPPLUNGSSTECHER, INSBESONDERE FÜR EINE PLANARE BREITBAND-LAMBDA-SONDE**
SMALL COUPLER PLUG, ESPECIALLY FOR A PLANAR WIDE BAND LAMBDA PROBE
FICHE DE COUPLAGE DE PETITE TAILLE DESTINEE EN PARTICULIER A UNE SONDE LAMBDA PLANAIRE LARGE BANDE

(30) Priorität: 01.12.2000 DE 20020376 U
(43) Veröffentlichungstag der Anmeldung: 03.09.2003
(73) Patentinhaber: ROBERT BOSCH GMBH, 70442 Stuttgart (DE)
(72) Erfinder: MAUE, Hans-Heinrich, 74321 Bietigheim-Bissingen (DE); PADE, Wolfgang, 75428 Illingen (DE)
(86) Internationale Anmeldenummer: PCT/DE2001/004413
(87) Internationale Veröffentlichungsnummer: WO 2002/045212

(56) Entgegenhaltungen:
- US-A- 5 947 775
- US-A- 6 132 256

## Beschreibung

Die Erfindung betrifft einen Kupplungsstecker, insbesondere für eine planare Lambda-Sonde, bestehend aus einem Gehäuse, nämlich einem Grundkörper und einem Deckelelement, sowie elektrischen Bauteilen, die in das Gehäuse einlegbar und fixierbar sind, und einer Abgleicheinheit für eine Sonde, insbesondere eine planare Breitband-Lambda-Sonde, die in dem Kupplungsstecker oder über ein weiteres Kontaktelement ausserhalb des Kupplungssteckers anzubringen ist.

### Stand der Technik

Kupplungsstecker der vorstehenden Art sind in der Regel für die Verbindung zwischen einem Kabelbaumstecker und einer Lambda-Sonden ausgebildet, wobei die Anschlüsse, die im Kupplungsstecker vorgesehen sind, für Abgleich, Signal und/oder Heizung der Sonde vorgesehen sind. Die Lambda-Sonde und die Lambda-Regelung stellen heute in Verbindung mit dem 3-Wege-Katalysator ein wirksames Abgasreinigungsverfahren dar. Die Lambda-Sonde, die beispielsweise in ein Abgassystem eingeschraubt wird, umfasst einen Messfühler zur Feststellung des Sauerstoffgehalts im Abgas.

Der Restsauerstoffgehalt eignet sich sehr gut als Messgrösse und regelt das Luft-Kraftstoff-Verhältnis, da dieser präzise anzeigt, ob das Luft-Kraftstoff-Gemisch vollständig verbrennt.

Die Lambda-Sonde liefert dabei ein Spannungssignal, das den augenblicklichen Wert der Gemischzusammensetzung repräsentiert und den Gemischänderungen folgt. Die Kraftstoffzufuhr zum Motor wird durch eine Gemischaufbereitungsanlage entsprechen dem Signal der Lambda-Sonde derart geregelt, das ein stöchiometrisches Luft-Kraftstoff-Verhältnis λ=1 erreicht wird. Je nach Ausführungen des Abgassystems und dem Einsatzbedingungen werden beheizte oder unbeheizte Sonden eingesetzt. Weitere Anwendungen findet die Lambda-Sonde ausserhalb von Kraftstoffahrzeugen, z. B. zur Regelung von Gasmotoren oder Öl-/Gasbrennern.

Insbesondere Breitband-Lambda-Sonden sind modular aufgebaut und erlauben in Verbindung mit der Planartechnik die Integration mehrerer Funktionen. Sie weisen in der Regel Funktionsschichten auf, die aus einer porösen Schutzschicht, aus einer Aussenelektrode, einer Sensorfolie, einer Innenelektrode, einer Referenzluftkanalfolie, einer Isolationsschicht, einem Heizelement, einer Heizfolie, einem Widerstand bzw. einem Abgleichelement und Anschlusskontakten bestehen.

Da die Breitband-Lambda-Sonden aus der Kombination einer Nernet-Konzentrationszelle (=Sensorzelle) mit einer Sauerstoff-Ionen transportierenden Pumpzelle besteht, kann sie nicht nur im stöchiometrischen Punkt bei λ=1, sondern auch im mageren und fetten Bereich sehr exakt messen.

Jede Sonde ist individuell abzugleichen. Hierzu weist die Sonde einen eingebauten Widerstand ("Mini-Hybrid") auf. Der Abgleich, der vorzugsweise mittels einem Laserstrahl erfolgt, wird dadurch ausgeführt, dass die Widerstandsschicht, die sich auf einem Keramiksubstrat befindet, entsprechend abgetragen wird, wodurch eine Widerstandsänderung herbeigeführt wird und damit ein Abgleich erfolgt.

Eine Ausführungsform besteht darin, dass die Abgleicheinheit bzw. der Widerstand unmittelbar an der Sonde angeordnet ist. Ein weiteres Ausführungsbeispiel besteht darin, dass der Widerstand ausserhalb, beispielsweise an einem mit der Sonde gekoppeltem Kabelbaumstecker untergebracht ist.

Bisher erfolgt der Abgleich dadurch, dass das Gehäuse des Kupplungsstekkers, in dem der Widerstand eingebaut ist, ohne das Deckelelement zur Abgleichstelle transportiert wird. Nach der entsprechenden Laserbearbeitung für den Abgleich wurde dann im Anschluss an einer weiteren Montagestelle das Deckelelement aufgesteckt.

Um zu verhindern, dass Feuchtigkeit, Schmutz oder ähnliches in den Kupplungsstecker eindringt und um zu gewährleisten, dass die entsprechende Atmosphäre innerhalb des Kupplungssteckers herrscht, weist das Deckelelement zusätzliche Dichtungen auf. Ferner sind an dem Gehäuse des Kupplungssteckers Druckausgleichselemente angeordnet.

### Nachteile des Standes der Technik

Ein Nachteil der Ausführung des hier dargestellten Kupplungssteckers besteht darin, dass zusätzliche Arbeits- und Montageschritte notwendig sind, um nach dem Abgleich den Kupplungsstecker funktionsgerecht zu verschliessen.

Zudem ist es notwendig, ein zusätzliches Deckelelement zusammen mit einer Dichtung separat herzustellen, und dieses im Bereich des Abgleichs zur Verfügung zu stellen.

US-A-6 132 256 offenbart einen Stecker nach dem Oberbegriff des Anspruchs 1.

### Aufgabe der Erfindung

Die Aufgabe der Erfindung besteht darin, eine Ausführungsform des Kupplungssteckers, der insbesondere für eine planare Breitband-Lambdasonde vorgesehen ist, derart weiterzubilden, dass diese sehr kostengünstig herstellbar und in ihren Ausmassen sehr klein bemessen ist.

### Lösung der Aufgabe

Die Lösung der Aufgabe ist in Anspruch 1 dargelegt.

### Vorteile der Erfindung

Ein wesentlicher Vorteil der Erfindung besteht darin, dass der hier erfindungsgemäss vorgeschlagene Kupplungsstecker kleinbauend ausgestaltet ist, da aufgrund der kompakten Bauweise, nämlich das Einlegen von elektrischen Kontakten in einen Grundkörper und die Anordnung des Abgleichelements ebenfalls in dem Kupplungsstecker, die Aussenmasse des Kupplungssteckers, der vorzugsweise zwischen einem Kabelbaum und einer Lambda-Sonde angeordnet ist, sehr klein sind.

Ferner erweist sich von Vorteil, dass der hier erfindungsgemäss vorliegende Kupplungsstecker nur wenige Bauteile aufweist. Hierdurch ist eine kostengünstige und effiziente Fertigung möglich.

Wenn der Grundkörper vollständig von dem Deckelelement umgeben ist, ist es möglich, mittels Anordnung von Dichtlippen innerhalb des Deckelelements bzw. Anordnung von Dichtungen an dem Grundkörper, den Innenraum des Kupplungssteckers abzudichten, so dass dieser insbesondere vor Spritzwasser und/oder Schmutz geschützt ist.

Zusätzlich unterstützt dies auch die Verrastung des Deckelelements an dem Grundkörper. Vorzugsweise ist eine Vor- und eine Endverrastung bzw. eine Primär- und eine Sekundärverriegelung vorgesehen. Diese ist derart ausgestaltet, dass das Deckelelement Rastarme aufweist, die sich im geschlossenen Zustand des Deckels an dem Grundkörper des Kupplungssteckers anlegen und dort mit Rastnasen eine Verrastung eingehen.

Diese Primärverriegelung erfolgt in zwei Stufen. In einer ersten Stufe verrastet das Deckelelement derart, dass es auf dem Grundkörper gehalten wird. Durch ein weiteres Drücken des Deckelelements in Richtung des Grundkörpers wird bewirkt, dass das in dem Grundkörper eingelegte Fixierelement auf das in dem Grundkörper geführte elektrische Kontaktelement, beispielsweise eine Flachsteckerhülse, die in Verbindung mit der Lambda-Sonde steht, fixiert wird. Die Fixierung erfolgt jedoch nur in der Form, dass das Fixierelement auf das Kontaktelement gedrückt wird, so dass das Kontaktelement und das Fixierelement eine feste Verbindung eingehen. Zusätzlich ist das Fixierelement in dem Grundkörper zwangsgeführt, das bedeutet, dass im fixierten Zustand des Kontaktelements das Fixierelement sich nur noch in axialer Aufsteckrichtung des Deckels bewegen kann. Zusätzlich sind an dem Fixierelement von dem Fixierelement wegweisende Stützelemente vorgesehen, die sich in Richtung des Deckelelements erstrecken.

Im nicht betätigten Zustand der Sekundärverriegelung, d. h. Nicht-Fixierung des Kontaktelements, stehen die Stützelemente derart weit über den Grundkörper des Kupplungssteckers hinaus, dass sich das Deckelelement nur in der ersten Verrastung der Primärverriegelung erhalten lässt. Nur bei vollständiger Betätigung und damit korrekter Fixierung des Kontaktelements geht das Deckelelement auch die zweite Verrastung der Primärverriegelung ein.

Dies hat den Vorteil, dass auf einfache Art und Weise geprüft werden kann, ob eine erfolgreiche Kontaktierung und damit auch Sicherung des elektrischen Kontaktelements zur Lambda-Sonde hin erfolgt ist, und dass das Deckelelement dicht gegenüber dem Grundkörper abschliesst.

Vorteilhafterweise sind an dem Umfang des Deckelelements Einhängeeinrichtungen vorgesehen, die es erlauben, den Kupplungsstecker beispielsweise mittels einer Nut-Federverbindung an einem weiteren Teil zu befestigen, oder aber Einhängeeinrichtungen in der Art, dass elektrische Leitungen an dem Kupplungsstecker befestigt werden können.

Optional sind Befestigungsmöglichkeiten für Spritzwassertüllen vorgesehen.

Ein weiter Vorteil der Erfindung besteht darin, dass die zuvor genannten Dichtungen an dem Deckelelement angespritzt werden können, so dass diese unverlierbar angeordnet sind.

Um einen gleichbleibenden Übergangswiderstand zwischen der Abgleicheinheit und den elektrischen Kontaktelementen zu gewährleisten, ist eine Lötverbindung vorgesehen.

Vorteilhafterweise besteht das Deckelelement aus PBT (Polybutylenterephthalt) oder gleichwertigen Materialien.

Ein weiteres vorteilhaftes Ausführungsbeispiel der Erfindung besteht darin, dass das Deckelelement durchsichtig gestaltet ist. Dadurch ist es möglich, dass das Deckelelement bereits vor dem Abgleich montiert werden kann, da bei durchsichtigen Deckelelementen der Abgleich mittels eines Laserstrahls durch das Deckelelement hindurch erfolgen kann.

Weitere vorteilhafte Ausgestaltungen gehen aus nachfolgenden Beschreibungen, den Ansprüchen und den Zeichnungen hervor.

Es zeigen:
- Fig. 1: Eine perspektivische Ansicht auf den erfindungsgemässen Kupp- lungsstecker, mit losgelöstem Deckelelement;
- Fig. 2: eine Rückansicht auf den Kupplungsstecker gemäss Fig. 1;
- Fig. 3: eine Draufsicht auf den Kupplungsstecker gemäss Fig. 2;
- Fig. 4: eine perspektivische Ansicht auf den Kupplungsstecker gemäss Fig. 1, jedoch gegenüber Fig. 1 im Schnitt und mit aufgesetz- tem, montiertem Deckel;
- Fig. 5: einen Schnitt durch den Kabelbaumstecker gemäss Fig. 1 mit dem Deckelelement in Vorraststellung;
- Fig. 6: einen Schnitt durch den Kabelbaumstecker gemäss Fig. 1 mit dem Deckelelement unmittelbar vor der Endlage;
- Fig. 7: einen Schnitt durch den Kabelbaumstecker gemäss Fig. 1 mit dem in der Endlage.

### Beschreibung eines Ausführungsbeispiels

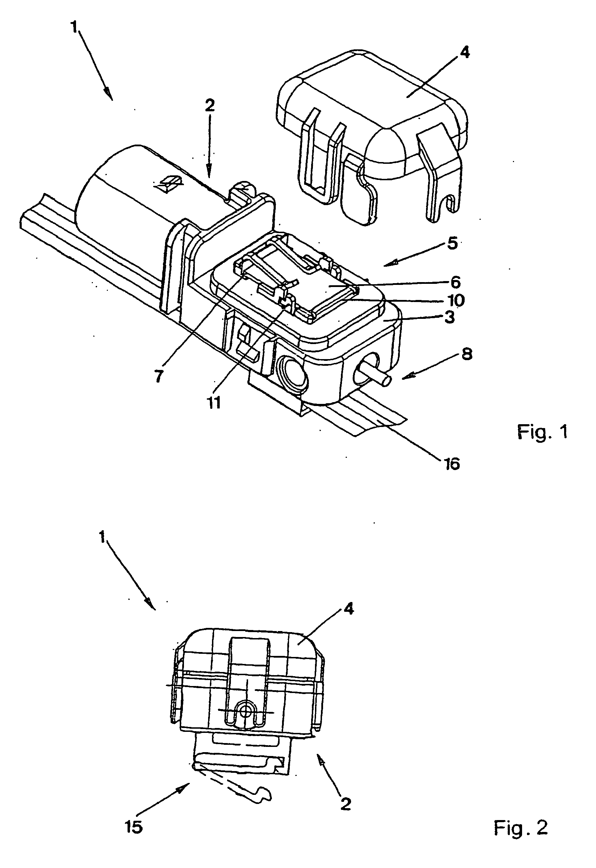

Bei dem in den Fig. 1 bis 4 dargestellte Kupplungsstecker 1 handelt es sich um einen solchen Stecker, der aus einem Gehäuse 2 besteht, dass sich aus einem Grundkörper 3 und einem Deckelelement 4 zusammensetzt.

Auf dem Grundkörper 3 ist in einer Haltevorrichtung 5 eine Abgleicheinheit 6 angeordnet, die wiederum über elektrische Kontaktelemente 7 mit der über ein Verbindungselement 8 verbundenen Lambda-Sonde bzw. mit dem über den in den Kupplungsstecker 1 eingefügten und in den Zeichnungen nicht näher dargestellten Stecker in Verbindung steht.

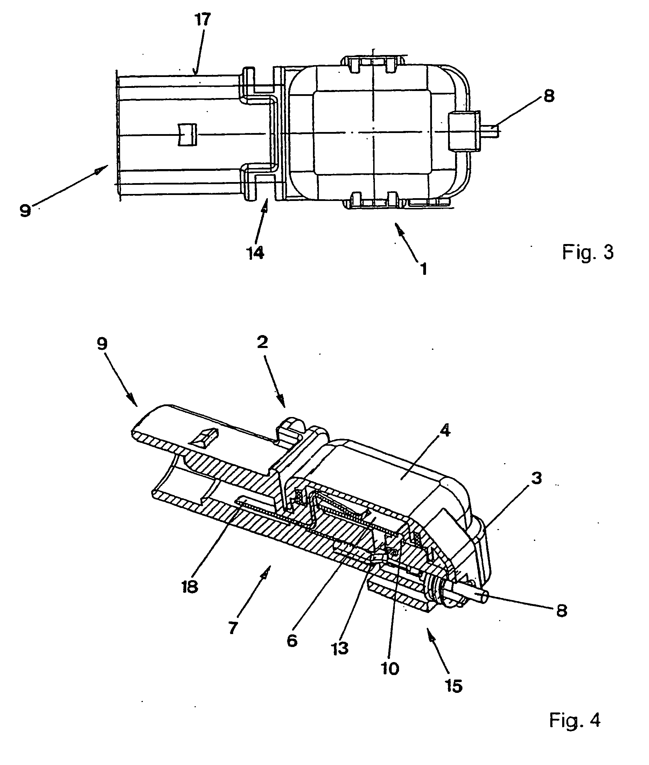

Die elektrischen Kontaktelemente 7 bestehen aus leiterbahnähnlich geformten Metallstreifen, die im Bereich der Kupplungsmöglichkeit 9 (Fig. 4) des Kupplungssteckers 1 mit ihrer einen Seite enden.

Die Abgleicheinheit 6 wird über Führungselemente 10, die zum grössten Teil an dem Grundkörper 3 angeordnet sind, geführt und durch die elektrischen Kontaktelemente 7 positionsgerecht gehalten.

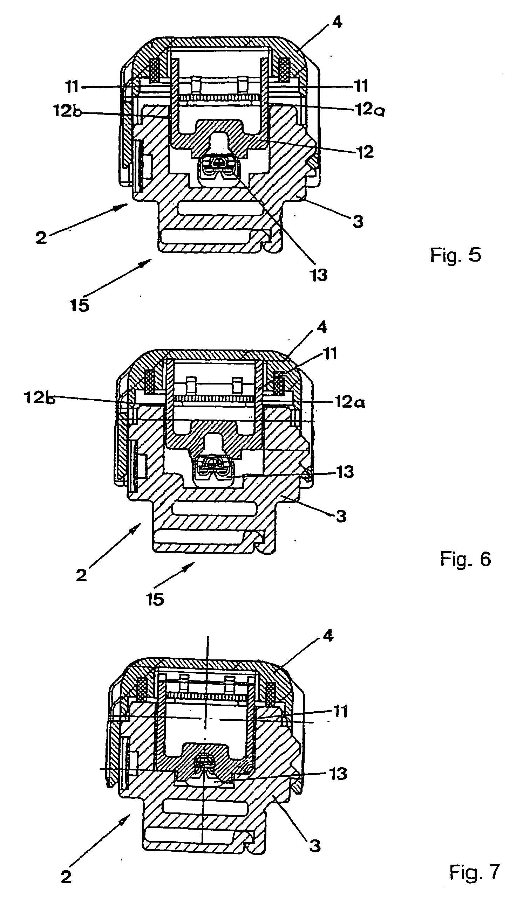

Um die seitliche Verschiebung der Abgleicheinheit 6 zu verhindern, sind senkrecht zur Längsausdehnung der Abgleicheinheit 6 Stützelemente 11 vorgesehen. Diese Stützelemente 11, wie sie insbesondere in den Fig. 5, 6 und 7 dargestellt sind, sind als Teil eines Fixierelements 12 ausgebildet.

Das Fixierelement 12 ist als Sekundärverriegelungselement vorgesehen und weist die Funktion auf, einen in dem Gehäuse 2 angeordneten elektrischen Kontakt 13, der insbesondere mit der Lambda-Sonde in Verbindung steht, positionsgerecht zu halten.

Hierzu ist das Fixierelement 12 in seinem Querschnitt vorzugsweise W-förmig ausgebildet, wobei es axial zwischen seinen beiden Schenkeln 12a/12b im montierten Zustand (Fig.7) den elektrischen Kontakt 13 einschliesst.

Das Sekundärverriegelungselement bzw. das Fixierelement 12 ist ferner derart ausgestaltet, dass dieses vorzugsweise mit den Stützelementen 11 ein einstückiges Teil bildet.

Im noch nicht montierten und fixierten Zustand des elektrischen Kontakts 13, wie es in Fig. 5 dargestellt ist, ragen die Stützelemente 11 derart weit aus dem Gehäuse 2 heraus, dass das Deckelelement 4, das auf das Gehäuse 2 aufgesetzt wird, nur in einer Vorverrastung fixiert werden kann.

Dies bewirkt, dass bei nicht betätigter Sekundärverriegelung und damit nicht funktionsgerechter Fixierung des elektrischen Kontaktes 13 und damit nicht regelgerechter Positionierung des Fixierelements 12 das Deckelelement 4 nicht schliesst (s. Fig. 6).

Erst durch die lagegerechte Positionierung der Sekundärverriegelung in seiner Endlage ist es möglich, dass das Deckelelement 4 seine eigene Endlage einnimmt.

Die einmal montierte Sekundärverriegelung ist nach deren Verriegelung nicht mehr lösbar, ohne den Kupplungsstecker 1 vollständig zu zerstören.

Vorzugsweise weist der Kupplungsstecker 1 an seinem Umfang Nuten 14 auf, die es erlauben, einen Kupplungsstecker 1 in dafür vorgesehene Halter einzufügen.

Zusätzlich sind im Grundkörper 2 Halte- und Fixierelement 15, so wie es in Fig. 2 dargestellt ist, angeordnet, die es erlauben, den Kupplungsstecker 1 an elektrischen Leitungen 16, wie in Fig. 1 dargestellt, anzuordnen.

Hierzu ist das Halteelement 15 clipartig ausgebildet, so dass der Kupplungsstecker 1 bei geöffneter Stellung des Halteelements 15 auf einen Kabelstrang gesteckt werden kann, und mittels einer weiteren Bewegung dieses dann verschlossen werden kann.

Dadurch ist die Gelegenheit gegeben, den Kupplungsstecker beispielsweise an einen Motor (Halter) zu befestigen.

Aufgrund seiner geringen äusseren Masse ist es auch möglich, den Kupplungsstecker in einem Rillenrohr unterzubringen.

## Patentansprüche

1. Kupplungsstecker (1), insbesondere für eine planare Lambda-Sonde, bestehend aus
- einem Gehäuse (2), nämlich einem Grundkörper (3) und einem Dekkelelement (4) sowie
- elektrischen Bauteilen, die in das Gehäuse einlegbar und fixierbar sind, und
- einem Abgleichelement (6) für eine Sonde, insbesondere eine planare Breitband-Lambdasonde, die in dem Kupplungsstecker (1) oder über ein Kontaktelement (8) ausserhalb des Kupplungssteckers anzubringen ist, wobei
das Deckelelement (4) über der Abgleicheinheit (6) aufsteckbar ist und eine Primär-Verriegelung aufweist, **dadurch gekennzeichnet, dass** das Deckelelement eine mit dem Deckelelement zusammenwirkende Sekundärverriegelung aufweist, wobei die Sekundärverriegelung als Fixierelement (12) zum Fixieren mindestens eines in dem Gehäuse (2) eingelegten elektrischen Kontaktes (13) vorgesehen ist und dieses Fixierelement (12) zusätzlich zum Deckelelement (4) hinweisende Stützelemente (11) aufweist in der Art, dass nur in der Endstellung des Sekundärelements das Deckelelement (4) vollständig schliesst.

2. Kupplungsstecker nach Anspruch 1, **dadurch gekennzeichnet, dass** das Deckelelement (4) durchsichtig ist.

3. Kupplungsstecker nach mindestens einem der vorhergehenden Ansprüche, **dadurch gekennzeichnet, dass** die Abgleicheinheit (6) mittels federartig ausgebildeten Niederhaltern bzw. elektrische Kontaktelemente (7) an dem Gehäuse (2) gehalten wird.

4. Kupplungsstecker nach mindestens einem der vorhergehenden Ansprüchen, **dadurch gekennzeichnet, dass** die elektrischen Bauteile Steckkontakte (18) sind.

5. Kupplungsstecker nach Anspruch 4, **dadurch gekennzeichnet, dass** die federartig ausgebildeten Niederhalter bzw. elektrische Kontaktelemente (7) und die Steckkontakte (18) miteinander elektrisch verbunden sind.

6. Kupplungsstecker nach Anspruch 5, **dadurch gekennzeichnet, dass** die federartig ausgebildeten Niederhalter bzw. elektrische Kontaktelemente (7) und die Steckkontakte (18) ein einstückiges Teil bilden.

7. Kupplungsstecker nach mindestens einem der vorhergehenden Ansprüche, **dadurch gekennzeichnet, dass** die elektrischen Kontaktelemente (7) und die Abgleicheinheit (6) mittels gelöteter Verbindungen miteinander elektrisch verbunden sind.

8. Kupplungsstecker nach mindestens einem der vorhergehenden Ansprüche, **dadurch gekennzeichnet, dass** eine Verrastung (12) zwischen dem Grundkörper (3) und dem Deckelelement (4) vorgesehen ist.

9. Kupplungsstecker nach Anspruch 6, **dadurch gekennzeichnet, dass** eine Vor- und Endverrastung vorgesehen ist.

10. Kupplungsstecker nach mindestens einem der vorhergehenden Ansprüche, **dadurch gekennzeichnet, dass** an dem Umfang (17) des Kupplungssteckers (1) Einhängeeinrichtungen vorgesehen sind.

11. Kupplungsstecker nach Anspruch 10, **dadurch gekennzeichnet, dass** die Einhängeeinrichtung als Nut (14) ausgebildet ist, in die eine Feder eingreift.

12. Kupplungsstecker nach Anspruch 10, **dadurch gekennzeichnet, dass** die Einhängeeinrichtung als Aufnahme für elektrische Leitungen vorgesehen ist.

13. Kupplungsstecker nach mindestens einem der vorhergehenden Ansprüche, **dadurch gekennzeichnet, dass** eine Befestigungsmöglichkeit für eine Spritzschutztülle an dem Deckelelement (4) vorgesehen ist.

14. Kupplungsstecker nach Anspruch 10, **dadurch gekennzeichnet, dass** die Einhängeeinrichtung als Halte- und Fixierelement (15) zur Aufnahme mindestens eines Teils einer elektrischen Leitung (16) ausgebildet ist.

## Claims

1. Coupling plug (1), in particular for a flat lambda probe, comprising
- a housing (2), specifically a base body (3) and a cover element (4), and also
- electrical components which can be placed and fixed in the housing, and
- a compensation element (6) for a probe, in particular a flat broadband lambda probe which can be mounted in the coupling plug (1) or outside the coupling plug by means of a contact element (8), it being possible for the cover element (4) to be plugged-on over the compensation unit (6) and to have a primary locking means, **characterized in that** the cover element has a secondary locking means which interacts with the cover element, with the secondary locking means being provided as a fixing element (12) for fixing at least one electrical contact (13) which is placed in the housing (2) and this fixing element (12) additionally having support elements (11) which point towards the cover element (4) in such a way that the cover element (4) closes fully only in the end position of the secondary element.

2. Coupling plug according to Claim 1, **characterized in that** the cover element (4) is transparent.

3. Coupling plug according to either or both of the preceding claims, **characterized in that** the compensation unit (6) is held on the housing (2) by means of spring-like holding-down devices or electrical contact elements (7).

4. Coupling plug according to at least one of the preceding claims, **characterized in that** the electrical components are plug-type contacts (18).

5. Coupling plug according to Claim 4, **characterized in that** the spring-like holding-down devices or electrical contact elements (7) and the plug-type contacts (18) are electrically connected to one another.

6. Coupling plug according to Claim 5, **characterized in that** the spring-like holding-down devices or electrical contact elements (7) and the plug-type contacts (18) form an integral part.

7. Coupling plug according to at least one of the preceding claims, **characterized in that** the electrical contact elements (7) and the compensation unit (6) are electrically connected to one another by means of soldered connections.

8. Coupling plug according to at least one of the preceding claims, **characterized in that** a latching means (12) is provided between the base body (3) and the cover element (4).

9. Coupling plug according to Claim 6, **characterized in that** a pre-latching and final-latching means is provided.

10. Coupling plug according to at least one of the preceding claims, **characterized in that** hook-in devices are provided on the periphery (17) of the coupling plug (1).

11. Coupling plug according to Claim 10, **characterized in that** the hook-in device is in the form of a groove (14) in which a spring engages.

12. Coupling plug according to Claim 10, **characterized in that** the hook-in device is provided as a holder for electrical lines.

13. Coupling plug according to at least one of the preceding claims, **characterized in that** a possible fastening means for a splash-protection sleeve is provided on the cover element (4).

14. Coupling plug according to Claim 10, **characterized in that** the hook-in device is in the form of a retaining and fixing element (15) for holding at least a portion of an electrical line (16).

## Revendications

1. Fiche d'accouplement (1), notamment pour une sonde Lambda plane, composée de
- un boîtier (2), à savoir un corps de base (3) et un élément couvercle (4) ainsi que
- des composants électriques qui peuvent être insérés et fixés dans le boîtier, et
- un élément de compensation (6) pour une sonde, notamment une sonde Lambda à large bande plane qui peut être appliquée dans la fiche d'accouplement (1) ou à l'extérieur de la fiche d'accouplement (1) par le biais d'un élément de contact (8),
- l'élément couvercle (4) pouvant être enfiché sur l'unité de compensation (6) et présentant un verrouillage primaire, **caractérisée en ce que** l'élément couvercle présente un verrouillage secondaire qui interagit avec l'élément couvercle, le verrouillage secondaire étant prévu sous la forme d'un élément de fixation (12) pour fixer au moins un contact électrique (13) inséré dans le boîtier (12) et cet élément de fixation (12) présentant en plus des éléments supports (11) dirigés vers l'élément couvercle (4) de sorte que l'élément secondaire ne ferme complètement l'élément couvercle (4) qu'en position finale.

2. Fiche d'accouplement selon la revendication 1, **caractérisée en ce que** l'élément couvercle (4) est transparent.

3. Fiche d'accouplement selon au moins l'une des revendications précédentes, **caractérisée en ce que** l'unité de compensation (6) est maintenue sur le boîtier (2) au moyen de serre-flancs ou d'éléments de contact électriques (7) de configuration élastique.

4. Fiche d'accouplement selon au moins l'une des revendications précédentes, **caractérisée en ce que** les composants électriques sont des contacts mâles (18).

5. Fiche d'accouplement selon la revendication 4, **caractérisée en ce que** les serre-flancs ou les éléments de contact électriques (7) de configuration élastique et les contacts mâles (18) sont reliés électriquement entre eux.

6. Fiche d'accouplement selon la revendication 5, **caractérisée en ce que** les serre-flancs ou les éléments de contact électriques (7) de configuration élastique et les contacts mâles (18) forment une pièce en une seule partie.

7. Fiche d'accouplement selon au moins l'une des revendications précédentes, **caractérisée en ce que** les éléments de contact électriques (7) et l'unité de compensation (6) sont reliés électriquement entre eux au moyen de liaisons brasées.

8. Fiche d'accouplement selon au moins l'une des revendications précédentes, **caractérisée en ce qu'**un enclenchement (12) est prévu entre le corps de base (3) et l'élément couvercle (4).

9. Fiche d'accouplement selon la revendication 6, **caractérisée en ce qu'**est prévu un pré-enclenchement et un enclenchement final.

10. Fiche d'accouplement selon au moins l'une des revendications précédentes, **caractérisée en ce que** des dispositifs d'accrochage sont prévus sur le pourtour (17) de la fiche d'accouplement (1).

11. Fiche d'accouplement selon la revendication 10, **caractérisée en ce que** le dispositif d'accrochage est réalisé sous la forme d'une rainure (14) dans laquelle vient en prise une languette.

12. Fiche d'accouplement selon la revendication 10, **caractérisée en ce que** le dispositif d'accrochage est prévu sous la forme d'un logement pour des câbles électriques.

13. Fiche d'accouplement selon au moins l'une des revendications précédentes, **caractérisée en ce qu'**il est prévu une possibilité de fixation pour un manchon de protection anti-projections sur l'élément couvercle (4).

14. Fiche d'accouplement selon la revendication 10, **caractérisée en ce que** le dispositif d'accrochage est réalisé sous la forme d'un élément d'arrêt et de fixation (15) destiné à recevoir au moins une partie d'un câble électrique (16).
